# EUROPÄISCHE PATENTANMELDUNG

(11) **EP 4 674 501 A1**
(43) Veröffentlichungstag der Anmeldung: **07.01.2026**
(21) Anmeldenummer: 25177658.9
(22) Anmeldetag: 20.05.2025
(51) Int. Cl.: B01D 33/46, B01D 33/60, B01D 33/76, B01D 33/80

(54) **VERFAHREN ZUR BEHANDLUNG VON ABWASSER UND ABWASSERBEHANDLUNGSANLAGE**

(30) Priorität: 05.07.2024 DE 102024119188
(71) Anmelder: ReTech Resources Technology GmbH, 16559 Liebenwalde (DE)
(72) Erfinder: Seewald, Gerhard, 16515 Oranienburg (DE); Topka, Hendric, 16559 Liebenwalde (DE)
(74) Vertreter: Grünbaum, Annekathrin

(57) **Zusammenfassung**

Die Erfindung betrifft ein Verfahren zur Behandlung von Abwasser und eine Abwasserbehandlungsanlage.

Es ist daher Aufgabe der Erfindung die Nachteile des Standes der Technik zu beseitigen und ein Verfahren zur Behandlung von Abwasser und eine Abwasserbehandlungsanlage bereitzustellen, wobei das erfindungsgemäße Verfahren eine effiziente Filtration von Partikeln wie Zopfen und/oder Mikroplastik ermöglicht, ohne hierbei assoziierte organische Substanzen signifikant abzureichern und/oder assoziierte Mikrobiota signifikant zu schädigen, und wobei die erfindungsgemäße Abwasserbehandlungsanlage an das Anforderungsprofil verschiedener Anwendungsszenarien anpassbar ist.

Die Lösung dieser Aufgabe erfolgt durch die in den Ansprüchen aufgeführten Merkmale.

## Beschreibung

Die Erfindung betrifft ein Verfahren zur Behandlung von Abwasser und eine Abwasserbehandlungsanlage.

Eine Abwasserbehandlungsanlage, auch als Kläranlage bezeichnet, ist eine technische Anlage zur Reinigung von Abwasser. In modernen Abwasserbehandlungsanlagen werden hierfür mechanische, biologische und chemische Verfahren eingesetzt, welche nacheinander in verschiedenen Reinigungsstufen eingesetzt werden.

Während der ersten Reinigungsstufe, welche aus mechanischen Verfahren gebildet ist, durchfließt das Abwasser ein Filterelement, mit dem grobe Partikel im Abwasser zurückgehalten werden. Das Filterelement ist üblicherweise ein Rechen oder ein Sieb. Die groben Partikel, welche nach der fest-flüssig-Trennung als Rechen- bzw. Siebgut bezeichnet werden, können alle Arten von Zivilisationsmüll enthalten. Problematisch sind im Abwasser enthaltene Fasern (Textilfasern, Haare, Papier und Kunststoffe). Durch ihre Struktur neigen sie zur Verzopfung und können bei Pumpen und Rührern zu Schäden führen.

Dementsprechend ist es notwendig derartige Verzopfungen (aber auch alle anderen Partikel) effizient von dem Abwasser zu trennen. Hierbei weist entsprechendes Rechen- bzw. Siebgut direkt nach der Entnahme üblicherweise einen Wassergehalt von über 85 % auf. Da es Aufgabe einer Abwasserbehandlungsanlage ist, möglichst viel Abwasser derart aufzubereiten, dass es als Nutz- und/oder Trinkwasser wiederverwendet werden kann, ist es demnach notwendig das Rechen- bzw. Siebgut zu entwässern. Hierfür wird das Rechen- bzw. Siebgut in eine Entwässerungsvorrichtung überführt, wobei das Filterelement zur fest-flüssig-Trennung und die Entwässerungsvorrichtung als eine kombinierte Vorrichtung konzipiert sein können.

Eine entsprechende kombinierte Vorrichtung ist beispielsweise in der Schrift EP 3483126 offenbart. Im Speziellen offenbar ist eine Kläranlage zur Behandlung von Abwasser. Die Kläranlage umfasst eine Rechenanlage und einen der Rechenanlage in Strömungsrichtung des Abwassers nachgeordneten Sandfang. Mit Hilfe der Rechenanlage und des Sandfangs werden Feststoffe unterschiedlicher Partikelgröße aus dem Abwasser abgeschieden. Die Kläranlage umfasst ferner eine dem Sandfang in Strömungsrichtung des Abwassers nachgeordnete Siebvorrichtung (entspricht dem Filterelement), mit deren Hilfe das den Sandfang verlassende Abwasser gesiebt wird. Hierdurch entsteht ein Primärschlamm (entspricht dem Siebgut) und eine die Siebvorrichtung passierende Suspension. Die Kläranlage umfasst ferner einen Eindicker (entspricht der Entwässerungsvorrichtung), mit dessen Hilfe der die Siebvorrichtung verlassende Primärschlamm eingedickt wird. In einer vorteilhaften Ausführungsform ist ein mechanischer Eindicker einem statischen Eindicker nachgelagert, wobei die Verweilzeit des Primärschlamms im statischen Eindicker ein bis zehn Stunden betragen kann.

Nachteilig am benannten Stand der Technik ist die Art und Weise der Entwässerung des Rechen- bzw. Siebgut, welches üblicherweise einen Wassergehalt von über 85 % aufweist.

In diesem Wasser befinden sich zum einen organische Substanzen, welche als Kohlenstoffquelle für die nachgelagerte biologische Reinigungsstufe der Abwasserbehandlungsanlage, dienen. Hier werden beispielsweise mittels des Belebtschlammverfahrens zu entfernende Abwasserinhaltsstoffe durch biologische Prozesse (Veratmung, Biomassewachstum) in Formen überführt, die durch Sedimentation oder Stripping (gasförmiges Austreiben) aus dem Abwasser entfernt werden können und zudem möglichst unschädlich sind. Zum anderen enthält das Wasser eine entsprechende Mikrobiota, also eine Vielzahl von Mikroorganismen, welche die biologischen Prozesse umsetzt. Es ist demnach wünschenswert, beide Bestandteile möglichst verlustfrei und biologisch aktiv in die biologische Reinigungsstufe der Abwasserbehandlungsanlage zu überführen.

Abwasserbehandlungsanlage gemäß dem Stand der Technik resultieren jedoch in einer erheblichen Reduktion bzw. Inaktivierung der organischen Substanzen bzw. der Mikrobiota. Beispielsweise führen lange Verweilzeiten des Rechen- bzw. Siebguts in statischen Entwässerungsvorrichtungen in Kombination mit hoher Temperatur zu einem frühzeitigen Abbau organischer Substanzen. Einsetzender Sauerstoffmangel führt zu Fäulnis und einer entsprechenden Umstellung der Mikrobiota. Mechanische Entwässerungsvorrichtungen bewirken einen hohen Druck, welcher zur Inaktivierung zumindest eines Teils der Mikrobiota führt. Gleiches gilt für unnötig viele nacheinander gelagerte Verfahrensschritte, beispielsweise Pumpvorgängen, bei welchen die Mikrobiota auf Grund von hohem Druck und/oder auf Grund hoher Scherkräfte negativ beeinträchtigt wird.

Es ist demnach wünschenswert über eine mechanische Abwasserbehandlungsanlage zu verfügen, welche eine effiziente fest-flüssig-Trennung erlaubt, und dabei sowohl die organischen Verluste minimiert, als auch die relevante Mikrobiota biologisch aktiv in die biologische Reinigungsstufe überführt.

### Darstellung der Erfindung

Es ist Aufgabe der Erfindung die Nachteile des Standes der Technik zu beseitigen und ein Verfahren zur Behandlung von Abwasser und eine Abwasserbehandlungsanlage bereitzustellen, wobei das erfindungsgemäße Verfahren eine effiziente Filtration von Partikeln wie Zopfen und/oder Mikroplastik ermöglicht, ohne hierbei assoziierte organische Substanzen signifikant abzureichern und/oder assoziierte Mikrobiota signifikant zu schädigen, und wobei die erfindungsgemäße Abwasserbehandlungsanlage an das Anforderungsprofil verschiedener Anwendungsszenarien anpassbar ist.

Die Lösung dieser Aufgabe erfolgt durch die in den Ansprüchen aufgeführten Merkmale.

Die Lösung der Aufgabe erfolgt durch ein Verfahren zur Behandlung von Abwasser, wobei das Verfahren zur Behandlung von Abwasser folgende Verfahrensschritte aufweist:
a. Filtration von Substanzen aus Abwasser in einem Kanal mittels eines Filterbandes und damit einhergehende Ausbildung eines Filterkuchens auf dem Filterband
b. Abreinigen des Filterkuchens mittels eines Wassersprühnebels, derart, dass organische Kleinstbestandteile aus dem Filterkuchen wieder herausgespült werden und dem Abwasser im Kanal nach der Filtration aus Verfahrensschritt a) wieder zurückgeführt werden,
c. Reinigen des Filterbandes und Entfernen des Filterkuchens mittels Bürsten und/oder Entwässern des Filterkuchens mittels einer Filterpresse.

Gemäß verschiedener Ausführungsformen ist das Filterband ein umlaufendes Endlosfilterband und/oder die Filterpresse eine Schneckenfilterpresse.

Gemäß verschiedener Ausführungsformen werden mittels einer Steuerungs- und/oder Regelungseinheit folgende Größen geregelt und/oder gesteuert: Filterbandgeschwindigkeit, Bürstengeschwindigkeit, Schneckenpressgeschwindigkeit, Wassermenge und/oder -druck und/oder Neigungswinkel des Filterbandes.

Gemäß verschiedener Ausführungsformen werden zur Steuerung und/oder Regelung Messwerte erfasst, bevorzugt der Wasserstand im Kanal, die Maße des entstehenden Filterkuchens, die Geschwindigkeit des Filterbands, die Geschwindigkeit der Schneckenpresse, die Durchflussmenge im Kanal, und der Trocknungsgrad des Filterkuchens.

Die Lösung der Aufgabe erfolgt ferner durch eine Abwasserbehandlungsanlage, bevorzugt zur Behandlung von Abwasser in einem offenen Kanal in Kläranlagen. Die Abwasserbehandlungsanlage weist folgende Module auf: zumindest ein Filterbandmodul, zumindest ein Sprühmodul zumindest ein Reinigungsmodul zum Reinigen des Filterbandmoduls und/oder des Filterbandes und zumindest einer Steuerungs- und/oder Regelungseinheit. Das zumindest eine Filterbandmodul ist schräg in einen offenen Kanal aufstellbar und weist ein Filterband zum Herausfiltern von Substanzen aus dem in dem offenen Kanal befindlichen Abwasser auf. Das Filterband ist umlaufend über Umlenkrollen geführt und bevorzugt ein Endlosfilterband. Bei Nutzung der Abwasserbehandlungsanlage entsteht auf dem Filterband ein Filterkuchen. Das zumindest eine Sprühmodul ist oberhalb eines ersten Teils des Filterbandes angeordnet und dient zum Herausspülen organischer Bestandteile aus dem Filterkuchen. Das zumindest eine Reinigungsmodul dient zum Reinigen des Filterbandmoduls und/oder des Filterbandes. Das zumindest eine Reinigungsmodul ist an einem zweiten Teil des Filterbandes angeordnet. Das zumindest eine Reinigungsmodul weist eine Bürsteneinheit und/oder eine Filterpresse auf, um das Filterband vom Filterkuchen zu reinigen. Die zumindest eine Steuerungs- und/oder Regelungseinheit ist dafür eingerichtet mittels einer Sensor- und/oder Eingabeeinheit die Module der Abwasserbehandlungsanlage zu steuern und/oder zu regeln.

Gemäß verschiedener Ausführungsformen ist die Filterpresse eine Schneckenfilterpresse.

Gemäß verschiedener Ausführungsformen weist das zumindest eine Sprühmodul zumindest eine Wassernebelsprüheinheit auf. Die zumindest eine Wassernebelsprüheinheit weist zumindest eine Wassersprühdüse auf.

Gemäß verschiedener Ausführungsformen weist das Sprühmodul ein Pumpsystem auf.

Gemäß verschiedener Ausführungsformen ist das Filterband in Sandwichbauweise ausgestaltet, einlagig ausgestaltet und/oder individuell anpassbar. Ferner kann das Filterband in Bezug auf seine Filterfeinheit und/oder Struktur angepasst werden, um den Anforderungen verschiedener Kläranlagen gerecht zu werden. Auch können verschiedene Bänder miteinander verbunden werden, um eine individuelle Filterleistung zu erzielen. Beispielsweise kann ein Filterband mit 100 µm und ein Filterband mit 3 mm Poren für die Filtration von Mikroplastik und Verzopfungen kombiniert werden, wobei die Filterbänder übereinander (mehrlagig) und in Reihe (einlagig) kombiniert sein können. Die Geschwindigkeit des Filterbandes kann präzise auf die Erfordernisse eingestellt werden.

Gemäß verschiedener Ausführungsformen ist der Neigungswinkel des Filterbandmoduls einstellbar. Dies erlaubt eine Anpassung des Filterbandmoduls an die Kanäle verschiedener Kläranlagen.

Die gesamte Abwasserbehandlungsanlage besteht aus drei Hauptmodulen, nämlich dem zumindest einen Filterbandmodul, dem zumindest einen Sprühmodul und dem zumindest einen Reinigungsmodul. Substanzen wie Verzopfungen im Abwasser werden durch das Filterband herausgefiltert und es bildet sich ein Filterkuchen zur weiteren Tiefenfiltration des Abwassers, um kleinere Partikel wie Mikroplastik zu entfernen. Die Wassernebelsprüheinheit reinigt mit einem sehr feinen Wassernebel organische Bestandteile, die an die Filterrückstände gebunden sind und von den Belebungsbecken noch verwertet werden können. Schließlich wird das Filterband mit einer motorisierten Bürste gereinigt und das gereinigte Material mit einer eingebauten kleinen Schneckenfilterpresse weiter entwässert.

Vorteilhafterweise ist die Abwasserbehandlungsanlage bzw. dessen zumindest eines Filterbandmodul seitlich gegenüber dem Kanal abgedichtet, sodass sämtliches Abwasser zwangsläufig über das Filterband geführt wird. Eine Abdichtung kann bei einem Filterband, dessen Neigungswinkel einstellbar sein kann, beispielsweise mittels Gummilippen erfolgen. Dafür können sich Gummilippen auch am unteren Rand des Filterbandes befinden, um das Wasser auf das Förderband zu lenken. Denkbar ist auch die Verwendung von Gummilippen oberhalb und/oder entlang des Filterbandes, um den Filterkuchen auf dem Filterband aufzurollen.

Da sich neben den unerwünschten anorganischen Begleitstoffen auch für die Belebung wertvolle Organik beim Durchströmen des Abwassers durch den Kanal am Filterband ablagert, weist das zumindest eine Sprühmodul am oberen freiliegenden Führungsbereich des Filterbands der erfindungsgemäßen Abwasserbehandlungsanlage eine sanfte Niederdruck-Abspülvorrichtung auf. Die Niederdruck-Abspülvorrichtung dient dazu, die organischen Bestandteile wieder in wässrige Lösung zu bringen und sie somit vom Filterband sowie von den anorganischen Verschmutzungen zu separieren. Um zu vermeiden, dass bei diesem Prozess die Verzopfungen und Mikroplastiken ebenfalls durch das relativ grobmaschige Gewebe gespült werden, ist im Bereich der zumindest einen Wassernebelsprüheinheit unterhalb des Filterbands ein metallisches Spalt- bzw. Gewebesieb mit deutlich geringerer Filterfeinheit angeordnet, welches dies verhindert. Vorteilhafterweise ist das metallische Spalt- bzw. Gewebesieb zu Reinigungszwecken austauschbar ausgebildet, beispielsweise indem es seitlich zu einer Bewegungsrichtung des Filterbandes eingeschoben bzw. ausgezogen werden kann. Dies erlaubt auch eine schnelle Anpassung des metallischen Spalt- bzw. Gewebesiebes in Bezug auf dessen Filterfeinheit, indem ein anderes metallisches Spalt- bzw. Gewebesieb mit anderer Filterfeinheit eingesetzt wird. Die ausgespülte Organik durchdringt in gelöster Form das metallische Spalt- bzw. Gewebesieb und gelangt somit auf eine Reinseite der Abwasserbehandlungsanlage.

Vorteilhafterweise nutzt das zumindest eine Sprühmodul mittels des Pumpsystems das Abwasser auf der Reinseite des Filterbands, wodurch zusätzliche Pumpen überflüssig und Wasser- und Energieressourcen gespart werden. Das zumindest eine Sprühmodul erzeugt einen extrem feinen Wassernebel zur Minimierung der Schädigung der mikrobiellen Gemeinschaft. In einer bevorzugten Ausführung weist die Abwasserbehandlungsanlage mehrere Wassernebelsprüheinheiten mit jeweils mehreren Wassersprühdüsen auf, wobei bevorzugt jede Wassernebelsprüheinheit individuell in Bezug auf Öffnen und Schließen, Wassermenge und Druck gesteuert werden kann. Zum Beispiel sind Druck und Wassermenge einer untersten Wassernebelsprüheinheit am größten und nehmen in Richtung (entlang eines geneigten Filterbands) einer oberen Wassernebelsprüheinheit ab. Dadurch dass das zumindest eine Sprühmodul dem zumindest einen Reinigungsmodul physisch relativ weit vorgelagert ist, haben die Filterrückstände auf dem Filterband Zeit zu trocknen, bevor sie das zumindest eine Reinigungsmodul erreichen. Die in die Schneckenfilterpresse eintretenden vorgetrockneten Filterrückstände verbessern den nachfolgenden Entwässerungsprozess.

Das Pumpsystem kann alternativ durch eine am Aufstellungsort der Abwasserbehandlungsanlage vorhandene Wasserquelle gebildet sein, welche Wasser mit einem Vordruck bereitstellt, welcher zur Ausbildung eines Wassersprühnebels mittels einer Wassernebelsprüheinheit ausreicht. Dies kann beispielsweise ein Hauswasseranschluss, einer Hochdruckwasseranschluss, ein Hydrant o.ä. sein. Vorteilhaft hierbei ist, dass das Pumpsystem keine eigenständige Wasserpumpe aufweisen muss.

In dem zumindest einen Reinigungsmodul erfolgt eine Echtzeit-Reinigung des Filterbandes und eine weitere Entwässerung des Filterrückstands mit Hilfe zumindest einer motorisierten Bürste und zumindest einer integrierten Schneckenpresse. Die Bürstenköpfe der zumindest einen Bürsteneinheit können je nach Beschaffenheit des Filterbandes und/oder je nach Größe und/oder Zusammensetzung des Filterkuchens auswechselbar sein, sodass unterschiedliche Materialien zum Einsatz kommen können. Ferner können die Bürstenköpfe ortsveränderlich ausgebildet sein, und beim Start eines Reinigungsverfahrens in Richtung des Filterbandes verfahrbar sein. Ein entsprechender zu definierender Anpressdruck zwischen Filterband und Bürstenkopf kann mittels eines Drucksensors ermittelt werden. Es ist denkbar, dass mehrere Bürsten zum Einsatz, beispielsweise eine erste Bürste für eine Grobreinigung, und eine zweite Bürste für eine Feinreinigung. Der Betrieb des zumindest einen Reinigungsmoduls kann in Bezug auf Lage, Start/Stop und Geschwindigkeit der Bürsten manuell oder automatisiert mittels einer Steuerungs- und/oder Regelungseinheit und/oder Sensoreinheit erfolgen. Ferner kann auch der Betrieb der Schneckenfilterpresse manuell oder automatisiert mittels einer Steuerungs- und/oder Regelungseinheit und/oder Sensoreinheit, aufweisend beispielsweise Füllstandssensoren, erfolgen.

Mit Hilfe einer Steuerungsprogrammierung können automatisierte, intelligente Filtrationsprozesse realisiert werden, die genau auf die Bedürfnisse der verschiedenen Anwendungsszenarien zugeschnitten sind, von der reinen Verzopfungsfiltration bis hin zur gleichzeitigen Mikroplastikfiltration. Jedes Modul ist bevorzugt mit einer unabhängigen Steuer- und/oder Regelungseinheit ausgestattet, über welche Betriebsparameter einzelner Module individuell einstellbar sein. Ferner können alle Steuerungseinheiten so programmiert werden, dass sie miteinander arbeiten und entsprechende Betriebsparameter aufeinander abstimmen. Die Parameter des Filtrationsprozesses können individuell angepasst werden und der Filtrationsprozess wird automatisch in Abhängigkeit von der Wassermenge, der Beschaffenheit des Bandes usw. betrieben, wie im Folgenden beispielhaft erläutert.

Ein Filterband mit einer beispielhaften Feinheit von 500 µm wird ausgewählt und die Filterbandgeschwindigkeit wird angepasst, um einen dickeren und feineren Filterkuchen zur Filtration von Mikroplastik zu erhalten. Gleichzeitig nehmen das Volumen und der Druck des Sprühwassers in Richtung des Filterbandes ab, um den Filterkuchen länger zu erhalten und die anhaltenden organischen Bestandteile am Ende des Filtrationsprozesses ausreichend zu eruieren. Die Geschwindigkeit der motorisierten Bürste wird erhöht, um den dickeren Kuchen angemessen zu reinigen.

Vorteilhafterweise ist die komplette Abwasserbehandlungsanlage über Lagerungen, beispielsweise Schwenklager, mittels eines Antriebs, beispielsweise einem Linearantrieb, schwenkbar ausgebildet. Im Havariefall kann so, beispielsweise ausgelöst durch Füllstandsgrenzschalter (Liquiphant), innerhalb kurzer Zeit eine ausreichend freie Durchfluss-Querschnittsfläche im Kanal erzeugt werden, um somit ein seitliches Überlaufen des Abwassers aus dem Kanal zu vermeiden.

### Ausführung der Erfindung

Die Erfindung wird anhand eines Ausführungsbeispiels näher erläutert. Hierzu zeigen
- Figur 1: die Abwasserbehandlungsanlage in schematischer Ansicht,
- Figur 2: einen Schnitt durch die Abwasserbehandlungsanlage in seitlicher Ansicht.

In der Beschreibung wird auf die beigefügten Zeichnungen Bezug genommen, in denen zur Veranschaulichung spezifische Ausführungsformen gezeigt sind, in denen die erfindungsgemäße Anordnung ausgeübt werden kann. In dieser Hinsicht wird eine Richtungsterminologie wie etwa "oben", "unten" usw. mit Bezug auf die Orientierung der beschriebenen Zeichnungen verwendet. Die Richtungsterminologie dient der Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

In den Figuren werden identische oder ähnliche Elemente mit identischen Bezugszeichen versehen, soweit dies zweckmäßig ist.

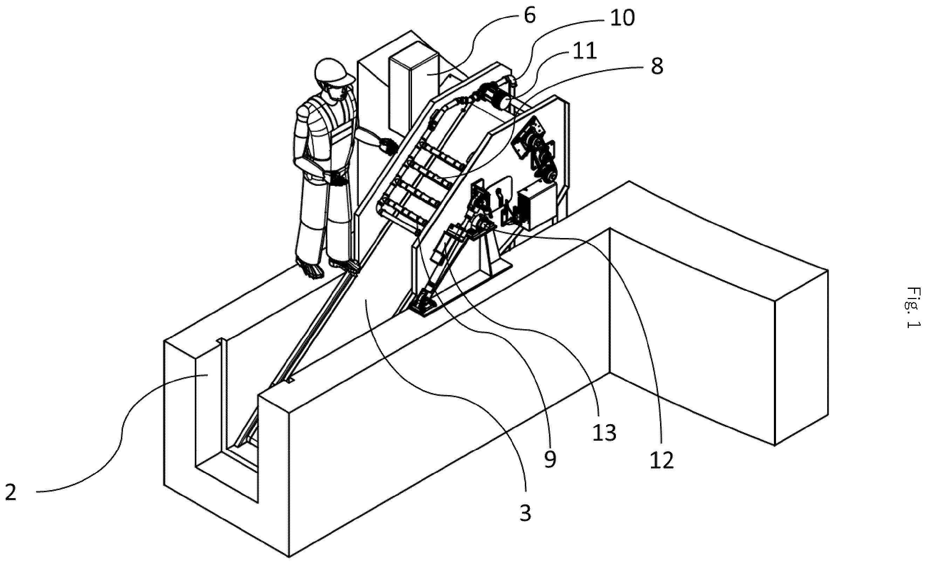

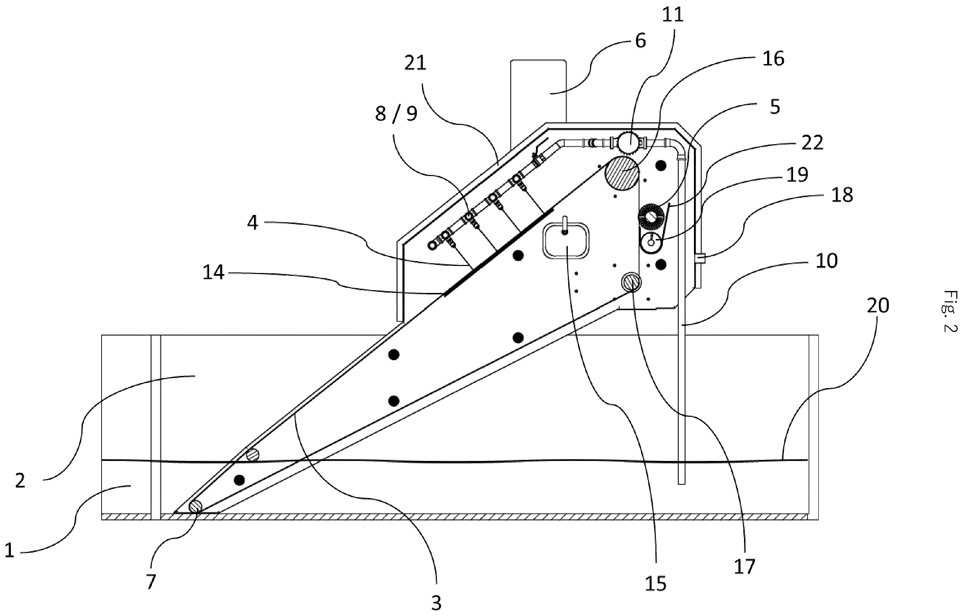

Der erfindungsgemäße Abwasserbehandlungsanlage ist in Figur 1 dargestellt. Die Abwasserbehandlungsanlage weist folgende Module auf: zumindest ein Filterbandmodul, zumindest ein Sprühmodul, zumindest ein Reinigungsmodul zum Reinigen des Filterbandmoduls und/oder des Filterbandes 3 und zumindest einer Steuerungs- und/oder Regelungseinheit 6. Das zumindest eine Filterbandmodul ist schräg in einen offenen Kanal 2 aufstellbar und weist ein Filterband 3 zum Herausfiltern von Substanzen aus dem in dem offenen Kanal 2 befindlichen Abwasser 1 auf. Das Filterband 3 ist bevorzugt umlaufend über Umlenkrollen 7 (besser ersichtlich in Figur 2) geführt. Bevorzugt ist das Filterband 3 ein Endlosfilterband. Bei Nutzung der Abwasserbehandlungsanlage entsteht auf dem Filterband 3 ein Filterkuchen. Das zumindest eine Sprühmodul ist oberhalb eines ersten Teils des Filterbandes 3 angeordnet und dient zum Herausspülen organischer Bestandteile aus dem Filterkuchen. Das zumindest eine Reinigungsmodul dient zum Reinigen des Filterbandmoduls und/oder des Filterbandes 3. Das zumindest eine Reinigungsmodul ist an einem zweiten Teil des Filterbandes 3 angeordnet. Das zumindest eine Reinigungsmodul weist eine Bürsteneinheit und/oder eine Filterpresse auf, um das Filterband 3 vom Filterkuchen zu reinigen. Die zumindest eine Steuerungs- und/oder Regelungseinheit 6 ist dafür eingerichtet mittels einer Sensor- und/oder Eingabeeinheit die Module der Abwasserbehandlungsanlage zu steuern und/oder zu regeln.

Entsprechend der Ausführungsform gemäß Figur 1 kann die Abwasserbehandlungsanlage ein Schwenklager 12 aufweisen, um welches sich die Abwasserbehandlungsanlage, insbesondere das Filterband 3, mittels eines Schwenkantriebs 13 aus dem Kanal 2 schwenken lässt. Im Havariefall kann so, ausgelöst durch ein Notfallsystem und/oder durch ein Sensorsystem, beispielsweise durch Füllstandsgrenzschalter (Liquiphant), innerhalb kurzer Zeit eine ausreichend freie Durchfluss-Querschnittsfläche im Kanal 2 erzeugt werden, um somit ein seitliches Überlaufen des Abwassers 1 aus dem Kanal 2 zu vermeiden.

Gemäß verschiedener Ausführungsformen weist das Sprühmodul bevorzugt vier Wassernebelsprüheinheiten 8 auf. Wiederum bevorzugt weist jede Wassernebelsprüheinheit jeweils vier Wassersprühdüsen 9 auf. Bevorzugt werden die Wassernebelsprüheinheiten 8 mittels einer Pumpe 11 über das Pumpsystem 10 mit geklärtem Abwasser 1 von der Reinseite der Abwasserbehandlungsanlage (in Fließrichtung des Abwasser 1 hinter dem Filterband 3) beaufschlagt.

Figur 2 zeigt die erfindungsgemäße Abwasserbehandlungsanlage gemäß Figur 1, wobei die Abwasserbehandlungsanlage eine Einhausung 21 aufweist. Eine derartig eingehauste Abwasserbehandlungsanlage kann mittels einem Heißluftanschluss 18 bei Frosttemperaturen mit warmer Luft aus einem herkömmlichen Heizgebläse beaufschlagt werden, um eine ganzjährige Nutzung zu gewährleisten.

Das Filterband 3, welches als Endlosfilterband ausgebildet sein kann, wird mittels einer Antriebsrolle 16, welche bevorzugt oberhalb des Flüssigkeitsstands 20 des Abwasser 1 angeordnet ist, angetrieben. In Abhängigkeit des Schmutzaufkommens sowie der gewünschten Höhe des Filterkuchens auf dem Filterband 3 kann die Geschwindigkeit an einem Getriebemotor der Antriebsrolle16 manuell oder automatisch eingestellt werden. Das Filterband 3 wird wiederum bevorzugt um eine Spannrolle 17 und Umlenkrollen 7, beispielsweise zwei Umlenkrollen 7 gelenkt. An einer Umlenkrolle, bevorzugt an einer unteren Umlenkrolle 7, welche unterhalb des Flüssigkeitsstands 20 des Abwassers 1 angeordnet ist, wie in Figur 2 dargestellt, kann ein Abstreifer vorgesehen sein (hier nicht gezeigt), damit die Fasern, die sich dort ablagern, abgestreift werden und sich nichts aufbauen kann.

Das Filterband 3 bzw. das Filterbandmodul ist geneigt ausgebildet, bevorzugt in einem Winkel von 45° . Im oberen Bereich des Filterbandes 3, bevorzugt im Bereich des Sprühmoduls, kann eine austauschbare Siebfilterplatte 14 angeordnet sein. Die Siebfilterplatte 14 verhindert, dass Bestandteile des Filterkuchens durch den Wassersprühnebel 4 durch das Filterband 3 gespült werden.

Im zweiten Teil des des Filterbandes 3, dem Rücklaufbereich, welcher bevorzugt senkrecht ausgebildet ist, wie in Figur 2 ersichtlich, ist das Reinigungsmodul angeordnet. Eine Bürsteneinheit 5, welche bevorzugt zumindest eine Bürste 5 aufweist, wobei die Bürsteneinheit 5 und/oder die Bürste 5 auch positionsveränderlich ausgebildet sein kann/können, löst den Filterkuchen vom Filterband 3. Der Filterkuchen fällt bevorzugt in eine Filterpresse. Die Filterpresse ist bevorzugt eine Schneckenfilterpresse, welche beispielsweise einen Schneckenkasten 22 und eine Förderschnecke 19 aufweist. Der Filterkuchen fällt also beispielsweise in einen unter der Bürste 5 angeordneten Schneckenkasten 22, und wird, quer zur Bewegungsrichtung des Filterbandes 3, über eine Förderschnecke 19 zum Abwurf, beispielsweise in einen bauseitigen Container, befördert. Vorteilhafterweise entwässert die Filterpresse den Filterkuchen, wobei das resultierende Wasser dem Kanal 2 zugeführt werden kann.

Zu Wartungs- und Reparaturzwecken weist die Abwasserbehandlungsanlage eine Revisionsklappe 15 auf.

### Bezugszeichen

| | | | |
|---|---|---|---|
| **1** | Abwasser | **12** | Schwenklager |
| **2** | Kanal | **13** | Schwenkrantrieb |
| **3** | Filterband | **14** | Siebfilterplatte |
| **4** | Wassersprühnebel | **15** | Revisionsklappe |
| **5** | Bürsteneinheit/Bürste | **16** | Antriebsrolle |
| **6** | Steuerungs- und/oder Regelungseinheit | **17** | Spannrolle |
| | | **18** | Heißluftanschluss |
| **7** | Umlenkrolle | **19** | Förderschnecke |
| **8** | Wassernebelsprüheinheit | **20** | Flüssigkeitsstand |
| **9** | Wassersprühdüse | **21** | Einhausung |
| **10** | Pumpsystem | **22** | Schneckenkasten |
| **11** | Pumpe | | |

## Patentansprüche

1. Verfahren zur Behandlung von Abwasser aufweisend folgende Verfahrensschritte:
a. Filtration von Substanzen aus Abwasser (1) in einem Kanal (2) mittels eines Filterbandes (3) und damit einhergehende Ausbildung eines Filterkuchens auf dem Filterband (3),
b. Abreinigen des Filterkuchens mittels eines Wassersprühnebels (4), derart, dass organische Kleinstbestandteile aus dem Filterkuchen wieder herausgespült werden und dem Abwasser (1) im Kanal (2) nach der Filtration aus Verfahrensschritt a) wieder zurückgeführt werden,
c. Reinigen des Filterbandes (3) und Entfernen des Filterkuchens mittels Bürsten (5) und/oder Entwässern des Filterkuchens mittels einer Filterpresse.

2. Verfahren gemäß Anspruch 1, **dadurch gekennzeichnet, dass** das Filterband (3) ein umlaufendes Endlosfilterband ist und/oder die Filterpresse eine Schneckenfilterpresse ist.

3. Verfahren gemäß einem der vorhergehenden Ansprüche, **dadurch gekennzeichnet, dass** mittels einer Steuerungs- und/oder Regelungseinheit (6) folgende Größen geregelt und/oder gesteuert werden: Filterbandgeschwindigkeit, Bürstengeschwindigkeit, Schneckenpressgeschwindigkeit, Wassermenge und/oder -druck und/oder Neigungswinkel des Filterbandes.

4. Verfahren gemäß einem der vorhergehenden Ansprüche, **dadurch gekennzeichnet, dass** zur Steuerung und/oder Regelung Messwerte erfasst werden, bevorzugt Wasserstand im Kanal (2), Maße des entstehenden Filterkuchens, Geschwindigkeit Filterband, Geschwindigkeit Schneckenpresse, Durchflussmenge, Trocknungsgrad des Filterkuchen.

5. Abwasserbehandlungsanlage zur Behandlung von Abwasser (1) in einem offenen Kanal (2) in Kläranlagen aufweisend folgende Module:
zumindest ein Filterbandmodul, welches schräg in einen offenen Kanal (2) aufstellbar ist, aufweisend ein Filterband (3) zum Herausfiltern von Substanzen aus dem Abwasser (1) in dem offenen Kanal (2), wobei das Filterband (3) umlaufend über Umlenkrollen (7) geführt ist und wobei bei Nutzung der Abwasserbehandlungsanlage auf dem Filterband (3) ein Filterkuchen entsteht,
zumindest ein Sprühmodul, welches oberhalb eines ersten Teils des Filterbandes (3) angeordnet ist, zum Herausspülen organischer Bestandteile aus dem Filterkuchen,
zumindest ein Reinigungsmodul zum Reinigen des Filterbandmoduls und/oder des Filterbandes (3), wobei das zumindest eine Reinigungsmodul an einem zweiten Teil des Filterbandes (3) angeordnet ist, wobei das zumindest eine Reinigungsmodul eine Bürsteneinheit (5) und/oder eine Filterpresse aufweist, um das Filterband (3) vom Filterkuchen zu reinigen,
zumindest eine Steuerungs- und/oder Regelungseinheit (6), welche dafür eingerichtet ist mittels einer Sensor- und/oder Eingabeeinheit die Module der Abwasserbehandlungsanlage zu steuern und/oder zu regeln.

6. Abwasserbehandlungsanlage gemäß Anspruch 5, **dadurch gekennzeichnet, dass** die Filterpresse eine Schneckenfilterpresse ist.

7. Abwasserbehandlungsanlage gemäß einem der Ansprüche 5-6, **dadurch gekennzeichnet, dass** das zumindest eine Sprühmodul zumindest eine Wassernebelsprüheinheit (8) aufweisend zumindest eine Wassersprühdüse (9) aufweist.

8. Abwasserbehandlungsanlage gemäß einem der Ansprüche 5-7, **dadurch gekennzeichnet, dass** das Sprühmodul ein Pumpsystem (10) aufweist.

9. Abwasserbehandlungsanlage gemäß einem der Ansprüche 5-8, **dadurch gekennzeichnet, dass** das Filterband (3) in Sandwichbauweise ausgestaltet ist, einlagig ausgestaltet ist und/oder individuell anpassbar ist. Abwasserbehandlungsanlage gemäß einem der Ansprüche 5-9, **dadurch gekennzeichnet, dass** der Neigungswinkel des Filterbandmoduls einstellbar ist.
